# EUROPÄISCHE PATENTANMELDUNG

(11) **EP 1 111 487 A1**
(43) Veröffentlichungstag der Anmeldung: **27.06.2001**
(21) Anmeldenummer: 99125675.1
(22) Anmeldetag: 22.12.1999
(51) Int. Cl.: G05B 19/418, G06F 17/50

(54) **Verfahren und Vorrichtung zum Überprüfen der Baubarkeit eines mehrere Bauteile umfassenden Produkts**

(71) Anmelder: Tecoplan AG, 85521 Ottobrunn (DE)
(72) Erfinder: Baginski, Boris, Dr., 81245 München (DE)
(74) Vertreter: Banzer, Hans-Jörg, Dipl.-Ing.

(57) **Zusammenfassung**

Zum Überprüfen der Baubarkeit eines aus mehreren Bauteilen bestehenden Produkts, welches z.B. in der Kraftfahrzeug-, Luft-, Raumfahrt-, Schiffbau- und/oder Konsumgüterindustrie eingesetzt wird, wird vorgeschlagen, rechnergestützt, d.h. automatisch, digitale Baugruppendaten (8), welche räumliche Geometrieinformationen über eine bereits vorhandene Baugruppe enthalten, digitale Bauteiledaten (9), welche räumliche Geometrieinformationen über ein an der Baugruppe zu montierendes Bauteil enthalten, und digitale Positionsdaten (10), welche eine Positionssequenz mit mindestens zwei räumlichen Positionen beschreiben, wobei eine erste Position dem montierten Zustand des Bauteils und eine zweite Position dem demontierten Zustand des Bauteils entspricht, auszuwerten, um automatisch einen geeigneten Pfad für die Montage und/oder Demontage des Bauteils zu ermitteln, welcher eine kollisionsfreie Bewegung des Bauteils von der ersten Position in die zweite Position und/oder umgekehrt ermöglicht.

## Beschreibung

Die vorliegende Erfindung betrifft ein Verfahren zum Überprüfen der Baubarkeit eines mehrere Bauteile umfassenden Produkts, insbesondere eines rechnergestützt konstruierten Produkts, nach dem Oberbegriff des Anspruches 1 sowie eine entsprechende Vorrichtung nach dem Oberbegriff des Anspruches 21.

Die Entwicklung komplex aufgebauter Produkte, wie beispielsweise Produkte der Kraftfahrzeug- oder Luft- und Raumfahrtechnik, ist sehr langwierig und kostspielig.

Die Entwicklung und Konstruktion von derartigen komplex aufgebauten Produkten wird durch die CAD-Technik (Computer Aided Design) erleichtert. Im Entwicklungsprozeß werden die einzelnen Bauteile oder Bauteilgruppen in Übereinstimmung mit bestimmten Vorgaben an ihre Funktion und ihr Design rechnergestützt konstruiert, wobei hierzu beim Hersteller, beim Systemlieferanten und seinen Zulieferern eine Unmenge von dreidimensionalen CAD-Modellen (3D-CAD-Modellen) erstellt werden. Diese digitalen Modelle können im Anschluß an die Konstruktion zu einem physikalischen Prototypen verbaut werden, um anhand des physikalischen Prototypen die geometrische Stimmigkeit der einzelnen Bauteile und damit die Baubarkeit/Herstellbarkeit des Produkts beurteilen zu können.

Durch Anwendung der modernen Digital Mockup-Technik (DMU) kann ausgehend von den 3D-CAD-Modellen der einzelnen Bauteile anstelle eines physikalischen Prototypen ein virtueller digitaler Prototyp des Gesamtprodukts entwickelt werden. Hierzu werden in herkömmlichen DMU-Systemen alle auf den einzelnen CAD-Systemen konstruierten Bauteile miteinander zu einem digitalen Prototypen oder digitalen Abbild (einem sogenannten "Digital Mockup") des Gesamtprodukts kombiniert, wobei anhand des digitalen Prototypen die Baubarkeit manuell beurteilt werden kann. Durch die Digitalisierung des Gesamtprodukts kann eine wesentliche Beschleunigung des Entwicklungsprozesses erzielt werden.

Doch die Computerunterstützung ist auch bei Anwendung der DMU-Technologie begrenzt. Automatische Untersuchungen von Massedaten, d.h. von Produkten mit sehr vielen Bauteilen, wie z.B. Kraftfahrzeugen oder Flugzeugen, sind nur für Bauteile in statischer Verbauungslage möglich. Die Frage der Ein- oder Ausbaubarkeit kann auch in herkömmlichen DMU-Systemen nur manuell untersucht werden, wobei der jeweilige Benutzer ein bestimmtes Bauteil mit Hilfe einer normalen Computer-Maus oder einer sogenannten Space-Maus am Bildschirm seines Arbeitsplatzes manuell und völlig ohne Unterstützung zwischen den auf dem Bildschirm visualisierten unbewegten und bereits montierten Teilen einer entsprechenden Baugruppe "manövrieren" muß. Diese manuelle Untersuchung der Ein- oder Ausbaubarkeit eines bestimmten Bauteils ist sehr zeitaufwendig, da sie in "Handarbeit" erfolgt. Zudem muß eine derartige manuelle Untersuchung nach einer Konstruktionsänderung der bereits vorhandenen Baugruppe oder des betrachteten Bauteils vollständig neu durchgeführt werden, um die Ein- und Ausbaupfade neu beurteilen zu können.

Der vorliegenden Erfindung liegt daher die Aufgabe zugrunde, ein verbessertes Verfahren sowie eine entsprechende Vorrichtung zum Überprüfen der Baubarkeit eines rechnergestützt konstruierten Produkts vorzuschlagen, womit die Produktentwicklung erleichtert werden kann und somit die Entwicklungskosten reduziert werden können.

Diese Aufgabe wird gemäß der vorliegenden Erfindung durch ein Verfahren mit den Merkmalen des Anspruches 1 bzw. eine Vorrichtung mit den Merkmalen des Anspruches 21 gelöst. Die Unteransprüche definieren jeweils bevorzugte und vorteilhafte Ausführungsformen der vorliegenden Erfindung.

Erfindungsgemäß wird vollautomatisch ein geeigneter Einund/oder Ausbaupfad für ein an einer vorgegebenen Baugruppe zu montierendes Bauteil ermittelt, d.h. es wird für ein ausgewähltes Bauteil automatisch und ohne Benutzereingriffe ein geeigneter Pfad ermittelt, der eine kollisionsfreie Bewegung des Bauteils von einer außerhalb der vorgegeben Baugruppe befindlichen Start- oder Ausgangsposition in eine Zielposition, welche dem montierten Zustand des Bauteils entspricht, oder umgekehrt ermöglicht. Zu diesem Zweck werden sowohl für die Baugruppe als auch für das daran zu montierende Bauteil entsprechende digitale Bilddaten erzeugt, welche räumliche Geometrieinformationen über die Baugruppe bzw. das Bauteil enthalten und zusammen mit digitalen Positionsdaten, welche eine dem jeweils zu untersuchenden Ein- und/oder Ausbaupfad entsprechende Positionssequenz beschreiben, automatisch ausgewertet werden.

Die Ermittlung eines geeigneten Ein- und/oder Ausbaupfads erfolgt vorzugsweise durch Anwendung eines iterativen Algorithmus, in dessen Verlauf die ursprüngliche Positionssequenz schrittweise an eine ideale Positionssequenz angenähert wird, welche schließlich eine kollisionsfreie Montage und/oder Demontage des jeweils untersuchten Bauteils ermöglicht. Hierzu wird insbesondere der jeweils untersuchte Ein- und/oder Ausbaupfad abschnittsweise optimiert.

Ein weiterer wesentlicher Vorteil der Erfindung besteht darin, daß bereits geplante Ein- und/oder Ausbaupfade bei konstruktiven Veränderungen an den beteiligten Bauteilen automatisch angepaßt werden können, so daß auch nach Realisierung der konstruktiven Veränderungen weiterhin Kollisionen zuverlässig vermieden werden können. Damit ist die erfindungsgemäß vorgestellte Ein- und/oder Ausbaupfadplanung (DMU-Pfadplanung) ein wichtiges Werkzeug für den zukünftigen digitalen Produktionsprozeß. Insbesondere können alle zu montierende Komponenten oder Bauteile entwicklungsbegleitend automatisch auf ihre Ein- und Ausbaubarkeit geprüft werden, wobei das erfindungsgemäße System die Ein- und Ausbaupfade automatisch solange und soweit wie möglich den jeweils aktuellen Entwicklungsgegebenheiten anpaßt. Hierzu bietet es sich an, die Datenbanken für die Bauteiledaten, Baugruppendaten und Positionsdaten automatisch laufend zu überwachen und bei Feststellen einer Veränderung einen geeigneten Ein- oder Ausbaupfad anzupassen oder neu zu ermitteln. Auf diese Weise kann auch erkannt werden, wenn es nicht mehr möglich ist, eine bestimmte Montagereihenfolge durchzuführen. Falls die automatische Ermittlung eines geeigneten Ein- und/oder Ausbaupfads scheitert oder ein zuvor ermittelter Pfad nicht mehr automatisch korrigiert werden kann, ohne daß Kollisionen mit der jeweils betrachteten Baugruppe auftreten, kann automatisch eine entsprechende Meldung zur Konstruktionsänderung des jeweils untersuchten Bauteils oder der Baugruppe mit Informationen über die Kollisionsstellen ausgegeben werden.

Die Erfindung kann sowohl anhand der ursprünglichen (3D-)CAD-Daten des Bauteils bzw. der Baugruppe als auch anhand sogenannter Voxel-Daten, welche durch eine Umsetzung der CAD-Daten in ein neutrales angenähertes Datenformat gewonnen werden und die Grundlage für den digitalen Prototypen bilden, durchgeführt werden.

Die zuvor beschriebene automatisch durchgeführte iterative Ermittlung der Ein- und/oder Ausbaupfade der vorliegenden Erfindung eignet sich auch als interaktives Werkzeug für den digitalen Prototypenbau. Die Planung der Ein- und Ausbaupfade kann visualisiert werden, und es können vor und während der Pfadplanung beliebige Pfadveränderungen vorgenommen werden, um die Pfadplanung nach Wunsch zu beeinflussen.

Die vorliegende Erfindung ist insbesondere für automatische Massenuntersuchungen von beliebigen Montagereihenfolgen, beispielsweise in der Kraftfahrzeug-, Luft-, Raumfahrt-, Schiffbau- und/oder Konsumgüterindustrie (Haushaltsgeräte), geeignet, wo äußerst komplex aufgebaute Baugruppen zu entwickeln sind.

Die Erfindung wird nachfolgend näher anhand eines bevorzugten Ausführungsbeispiels unter Bezugnahme auf die beigefügte Zeichnung erläutert.

Fig. 1 zeigt ein vereinfachtes Blockschaltbild einer erfindungsgemäßen Vorrichtung bzw. eines erfindungsgemäßen Systems, und

Fig. 2 zeigt ein Flußdiagramm zur Erläuterung der Funktionsweise der in Fig. 1 gezeigten Vorrichtung bzw. des in Fig. 1 gezeigten Systems.

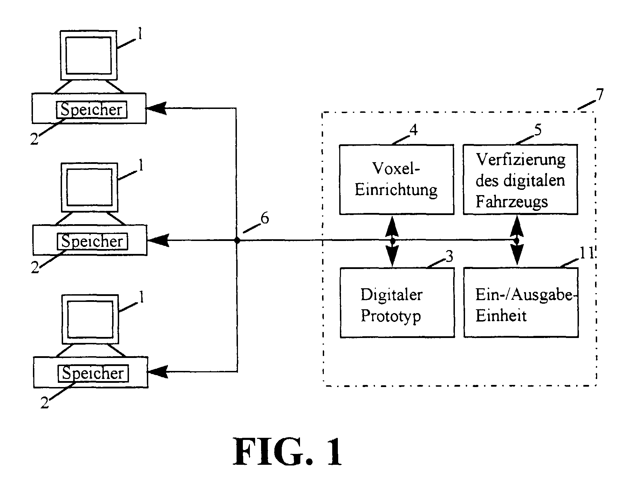

Bei dem in Fig. 1 gezeigten System werden die einzelnen Bauteile eines Produkts, beispielsweise eines Autos oder Flugzeugs, an unterschiedlichen Arbeitsplätzen 1 rechnergestützt konstruiert. Die in Fig. 1 gezeigten Arbeitsplatzrechner 1 entsprechen dabei CAD-Systemen, welche zu jeder augenblicklich gültigen Konstruktion des entsprechenden Bauteils digitale 3D-CAD-Bilddaten des jeweiligen Bauteils erzeugen und dieses Daten in Speichern 2 abspeichern und nach außen zugänglich machen. Die Speicher 2 sind in der Regel durch handelsübliche Massenspeicher (Festplatten) gebildet.

Die Arbeitsplatzrechner 1 können im Prinzip weltweit verstreut angeordnet sein, wobei jeder Arbeitsplatzrechner 1 über ein Datenübertragungsnetz 6 mit einer zentralen DMU-Einheit 7 verbunden ist, so daß die DMU-Einheit 7 auf die von den einzelnen Arbeitsplatzrechnern 1 angebotenen digitalen Bilddaten des jeweils konstruierten Bauteils zugreifen kann. Das Datenübertragungsnetz 7 kann sowohl kabelgebunden als auch kabellos ausgestaltet sein. Entscheidend alleine ist, daß eine Datenübertragung zwischen den Arbeitsplatzrechnern 1 und der DMU-Einheit 7 möglich ist. So ist insbesondere auch eine Datenübertragung über das Internet oder eine Funkübertragung, beispielsweise über ein Mobilfunknetz, denkbar, wenn in die Arbeitsplatzrechner 1 und die DMU-Einheit 7 entsprechende Schnittstellen integriert werden.

Wie in Fig. 1 gezeigt ist, umfaßt die DMU-Einheit 7 eine sogenannte Voxel-Einrichtung 4, deren Aufgabe es ist, die von den Arbeitsplatzrechnern 1 bereitgestellten digitalen Bilddaten der einzelnen Bauteile zu einer digitalen Abbildung des Gesamtprodukts, dem sogenannten digitalen Prototypen, zusammenzufügen. In der Regel werden jedoch an jedem Arbeitsplatzrechner 1 unterschiedliche CAD-Systeme eingesetzt, d.h. für jedes Bauteil wird vorzugsweise dasjenige CAD-System verwendet, welches am besten für die Konstruktion dieses Bauteils geeignet ist. Demzufolge werden von den einzelnen Arbeitsplatzrechner 1 für die einzelnen Bauteile digitale Bilddaten angeboten, welche in unterschiedlichen Datenformaten vorliegen können. Zudem handelt es sich meistens um sehr große Datenmengen, welche von den Arbeitspatzrechnern 1 bereitgestellt werden. Die Voxel-Einrichtung 4 ist daher derart ausgestaltet, daß sie diese unterschiedlichen und das jeweilige Bauteil exakt beschreibenden digitalen Bilddaten aus den unterschiedlichen CAD-Systemen in ein neutrales, angenähertes Datenformat konvertiert, welches auf das Wesentliche reduzierte ist. Dieses Datenformat wird auch als Voxelformat bezeichnet. Die von den einzelnen Arbeitsplatzrechnern 1 bereitgestellten CAD-Modelle der Bauteile des zu entwickelnden Produkts werden zur Konvertierung in die entsprechenden Voxel-Modelle trianguliert, wobei gleichzeitig das anfallende Datenvolumen um bis zu ca. 80% reduziert wird, so daß die Visualisierung beispielsweise kompletter Fahrzeuge möglich ist. Zu diesem Zweck setzt die Voxel-Einrichtung 4 die infolge der Datenkonvertierung aus den CAD-Modellen der einzelnen Bauteile gewonnenen Voxel-Modelle zu dem bereits zuvor erwähnten digitalen Prototypen zusammen, der in einer hierzu vorgesehenen Speichereinrichtung 3 zentral abgespeichert wird. Die Voxel-Einrichtung 4 bildet auf diese Weise den DMU (Digital Mockup) des zu entwickelnden Gesamtprodukts.

Die DMU-Einheit 7 umfaßt des weiteren eine Verifizierungseinrichtung 5 zur Verifizierung des somit erzeugten und in der Speichereinrichtung 3 abgelegten digitalen Prototypen. Diese Verifizierungseinrichtung 5 überprüft anhand des digitalen Prototypen, ob sämtliche Bauteile des Gesamtprodukts in ihrer Gesamtheit zusammenpassen. Dabei werden u.a. in dem digitalen Prototypen benachbarte Bauteile hinsichtlich möglicher Kollisionen und hinsichtlich der Einhaltung vorgegebener Mindestabstände vollautomatisch überprüft.

Insbesondere ist die Verifizierungseinrichtung 5 derart ausgestaltet, daß sie neben dem zuvor beschriebenen sogenannten statischen Geometriecheck auch eine dynamische Überprüfung der Ein- und Ausbauwege der einzelnen Bauteile sowie der eingesetzten Werkzeuge durchführt, um mögliche Probleme bei der Montage der Bauteile festzustellen.

Die in Fig. 1 gezeigten Einrichtungen 3-5 der DMU-Einheit 7 können in einem zentralen Rechner oder Server realisiert sein. Insbesondere können die Funktionen der Voxel-Einrichtung 4 und der Verifizierungseinrichtung 5 in Form von auf diesem zentralen Rechner ablaufenden Softwaremodulen implementiert sein.

Nachfolgend soll die von der Verifizierungseinrichtung 5 durchgeführte dynamische Überprüfung der Ein- und/oder Ausbauwege der einzelnen Bauteile näher erläutert werden. Mit Hilfe dieser Überprüfung kann festgestellt werden, ob das jeweilige Gesamtprodukt überhaupt baubar ist, d.h. ob die vorgesehene Reihenfolge von Montageschritten für die vorgesehenen Bauteile ohne Kollisionen und ohne Verletzungen von Mindestabständen möglich ist. Die Überprüfung reduziert sich für einen einzigen Montageschritt auf die Frage, ob ein einzelnes Bauteil einer bereits bestehenden Baugruppe problemlos hinzugefügt werden kann.

Zur Beurteilung dieser Frage wertet die Verifizierungseinrichtung die bereits vorhandenen (und nachfolgend der Einfachheit halber als Baugruppendaten bezeichneten) digitalen Bilddaten der jeweiligen Baugruppe, welche statische räumliche Geometrieinformationen über diejenige Baugruppe enthalten, mit der eine Kollision vermieden werden soll, sowie die (nachfolgend der Einfachheit halber als Bauteiledaten bezeichneten) digitalen Bilddaten des jeweiligen Bauteils, welche räumliche Geometrieinformationen über das zu montierende Bauteil enthalten, aus. Zudem werden Positionsdaten ausgewertet, welche Informationen über eine vorgegebene Positionssequenz enthalten, von der bei der Ermittlung des geeigneten Einbaupfads ausgegangen werden soll. Diese Positionssequenz entspricht dabei einer Folge von räumlichen Positionen, die - wenn sie linear interpolierend durchlaufen werden - einen Einbaupfad für das betrachtete Bauteil beschreiben. Von der Verifizierungseinrichtung 5 wird festgestellt, ob dieser Einbaupfad tatsächlich kollisionsfrei ist oder optimiert werden muß.

Im einfachsten Fall umfaßt die Positionssequenz, von der die Verifizierungseinrichtung 5 ausgeht, lediglich zwei Positionen, nämlich eine beispielsweise über geeignete Eingabemittel 11 (z.B. Tastatur oder Computer-Maus) frei wählbare Startposition, welche sich außerhalb der Baugruppe befindet und dem demontierten Zustand des Bauteils entspricht, sowie eine exakte Zielposition, welche dem montierten Zustand des Bauteils in bzw. an der Baugruppe entspricht. Ebenso ist jedoch auch möglich, eine Positionssequenz vorzugeben, welche mehr Positionen als die Start- und Zielposition umfaßt, wobei es sich in diesem Fall insbesondere um eine bereits zuvor als kollisionsfreier Einbaupfad ermittelte Positionssequenz handeln kann, die beispielsweise bei einer konstruktiven Veränderung der Baugruppe oder des Bauteils nochmals auf ihre Kollisionsfreiheit überprüft werden soll.

Die einzelnen räumlichen Positionen werden vorzugsweise durch sechsdimensionale Positionsdaten beschrieben, wobei für jede Position eine dreidimensionale Positionskomponente und eine dreidimensionale Orientierungskomponente des betrachteten Bauteils definiert ist.

Ausgehend von den zuvor beschriebenen Informationen versucht die Verifizierungseinrichtung 5, eine Positionssequenz zu ermitteln, welche - wenn sie linear interpolierend durchlaufen wird - einen kollisionsfreien Einbaupfad (und/oder Ausbaupfad) für das untersuchte Bauteil beschreibt. Ist es möglich, ohne Kollisionen von der zuvor beschriebenen Startposition zu der Zielposition zu gelangen, wird von der Verifizierungseinrichtung 5 als Ergebnis die lediglich aus der Start- und Zielposition bestehende Sequenz ausgegeben. In der Regel wird dies jedoch nicht der Fall sein, so daß ausgehend von der vorgegebenen Positionssequenz ein für die Montage des Bauteils tatsächlich geeigneter Pfad ermittelt werden muß.

Dabei wendet die Verifizierungseinrichtung ein iteratives Verfahren an, wobei die ursprüngliche Positionssequenz bzw. der entsprechende Pfad schrittweise, d.h. inkrementell, verbessert wird. Insbesondere werden die einzelnen Positionen der Sequenz schrittweise verschoben oder neue Positionen in die Sequenz eingefügt, bis eine Positionssequenz erhalten wird, bei der Kollisionen vollständig vermieden werden können (oder zumindest weniger gravierend als zuvor sind). Dieses iterative Verfahren wird solange wiederholt durchlaufen, bis ein kollisionsfreier Pfad ermittelt werden konnte oder eine Fortsetzung der Pfadplanung wegen Unterschreitung gewisser Grenzen nicht mehr sinnvoll ist.

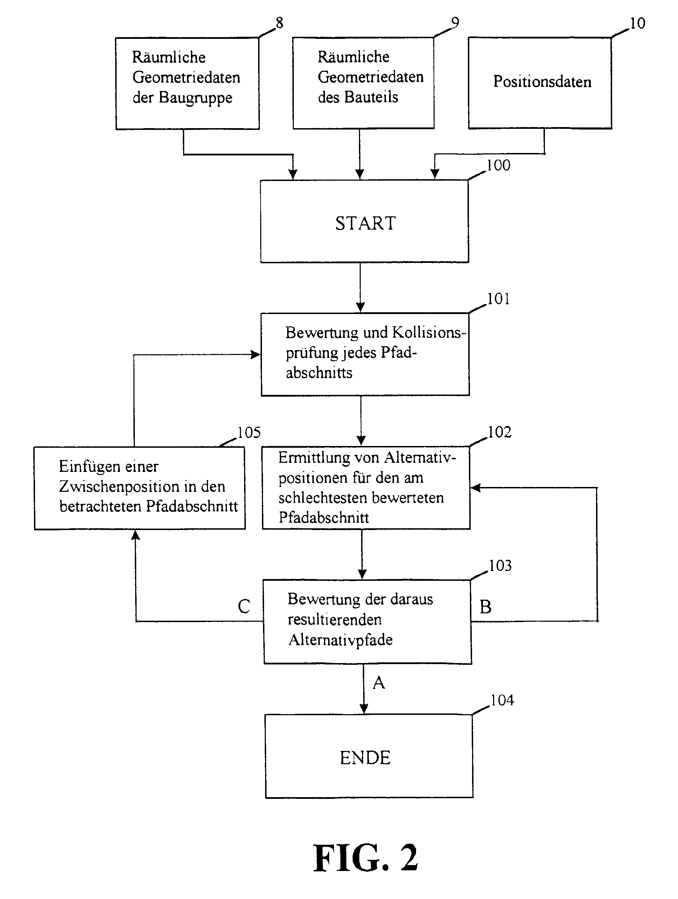

Das zuvor erwähnte iterative Verfahren läuft im wesentlichen in drei Schritten ab, die nachfolgend näher unter Bezugnahme auf Fig. 2 erläutert werden sollen.

Wie in Fig. 2 gezeigt ist, beginnt das Verfahren auf Grundlage von den gespeicherten Baugruppendaten 8 der betrachteten Baugruppe, den gespeicherten Bauteiledaten 9 des zu untersuchenden Bauteils und den gespeicherten Positionsdaten 10, welche eine bestimmte Positionssequenz beschreiben, von der ausgegangen wird. Im einfachsten Fall umfaßt die gespeicherte Positionssequenz lediglich die erwähnte Startposition und Zielposition. Ebenso ist jedoch auch möglich, daß - wie bereits beschrieben worden ist - das Verfahren für eine Positionssequenz mit mehr als zwei Positionen durchgeführt wird, welche beispielsweise von dem Benutzer eingegeben oder ausgewählt wird oder beispielsweise während einer früheren Verfahrensdurchführung als geeigneter Einbaupfad ermittelt worden ist und nunmehr überprüft werden soll.

Nach dem Starten des Verfahrens (Schritt 100) wird der den ursprünglichen Positionsdaten bzw. der ursprünglichen Positionssequenz entsprechende Pfad abschnittsweise auf Kollisionstiefe überprüft, wobei stärker mit der vorgegebenen Baugruppe kollidierende Pfadabschnitte eine schlechtere Bewertung als weniger stark kollidierende Pfadabschnitte erhalten (Schritt 101).

Jeder zu bewertende Pfadabschnitt ist dabei durch zwei sechsdimensionale Positionen definiert, welche den Pfadabschnitt begrenzen. Die Bewegung des beweglichen Bauteils zwischen diesen beiden Positionen entlang des jeweils betrachteten Pfadabschnitts wird durch eine lineare Interpolation des translatorischen und rotatorischen Anteils der einzelnen Positionsbeschreibungen ermittelt, woraus sich der dem jeweiligen Pfadabschnitt zugeordnete Bewegungsraum des Bauteils ergibt. Ausgehend von dem somit ermittelten Bewegungsraum wird dem jeweiligen Pfadabschnitt eine Bewertung zugewiesen, welche davon abhängt, wie stark der Bewegungsraum in dem jeweiligen Pfadabschnitt mögliche Hindernisse der Baugruppe durchdringt, wobei die Bewertung insbesondere umso geringer ist, je stärker der Bewegungsraum mit der Baugruppe in dem jeweils untersuchten Pfadabschnitt kollidiert.

Eine geeignete Bewertungsfunktion für Geometriebeschreibungen, die nach mathematischer Definition konvex oder bezüglich eines inneren Punktes sternförmig sind, ist die minimale kollisionsfreie Skalierung des beweglichen Bauteils im Bereich [0,1]. Dabei wird der kleinste benötigte Skalierungsfaktor für die Größe des Bauteils bestimmt, der eine Bewegung des entsprechend skalierten Bauteils ohne Kollision entlang der gesamten linearen Interpolationsbahn des jeweiligen Pfadabschnitts erlaubt. Diese Bewertungsfunktion ist eindeutig und liefert für jeden Pfadabschnitt einen Wert zwischen 0 und 1, wobei ein Pfadabschnitt, in dem der Bewegungsraum zu weniger tiefen Durchdringungen mit Hindernissen der Baugruppe führt, mit einem höheren Wert bewertet wird als ein Pfadabschnitt, bei dem der Bewegungsraum tiefer durch Hindernisse dringt.

Sollte es sich jedoch bei dem betrachteten Bauteil um eine nicht-konvexe und nicht-sternförmige Geometriebeschreibung handeln, kann die Geometriebeschreibung des bewegten Bauteils automatisch oder manuell in konvexe oder sternförmige Teilgeometrien zerlegt werden, wobei jede Teilgeometrie separat wie beschrieben bewertet wird und die somit gewonnenen Teil-Bewertungen auf geeignete Art und Weise kombiniert werden, um dann eine ebenfalls aussagekräftige Gesamt-Bewertung des jeweils betrachteten Pfadabschnitts zu erhalten. Dabei muß lediglich vorausgesetzt werden, daß die Topologie des bewegten Bauteils keine zu berücksichtigenden Löcher enthält. Löcher müssen allerdings üblicherweise nur im Nahbereich von Hindernissen berücksichtigt werden und erfordern meist spezifische Montagebewegungen, die ohne Einbaupfadplanung bestimmt werden können, so daß das beschrieben Bewertungsverfahren für die meisten praktischen Anwendungsfälle einsetzbar ist.

Nachdem auf zuvor beschriebene Art und Weise sämtliche Pfadabschnitte zwischen jeweils zwei Positionen der ursprünglichen Positionssequenz bewertet worden sind, wird derjenige Pfadabschnitt ermittelt, der hinsichtlich möglicher Kollisionen mit Hindernissen der Baugruppe am schlechtesten bewertet worden ist. Nur dieser am schlechtesten bewertete Pfadabschnitt wird in den nachfolgenden Schritten 102 und 103 betrachtet.

Im Schritt 102 werden für die beiden Positionen, welche den am schlechtesten bewerteten Pfadabschnitt beschreiben, Alternativpositionen bestimmt. Dies geschieht für die Anfangs- und Endposition des am schlechtesten bewerteten Pfadabschnitt in gleicher Weise.

Zur Bestimmung von Alternativpositionen wird zunächst diejenige Ebene bestimmt, welche orthogonal zu der Translationsbewegung des Bauteils entlang des betrachteten Pfadabschnitts ist und durch die jeweilige Position verläuft. Innerhalb dieser Ebene werden eine durch einen veränderbaren Parameter bestimmte Anzahl von Ausweichrichtungen ermittelt, welche maximal gespreizt, d.h. durch eine maximalen Zwischenwinkel voneinander beabstandet sind (beispielsweise vier Ausweichrichtungen mit einem Zwischenwinkel von jeweils 90° oder sechs Ausweichrichtungen mit einem Zwischenwinkel von jeweils 60° etc.).

Des weiteren wird eine ebenfalls durch einen veränderbaren Parameter bestimmte Anzahl von Rotationsrichtungen um maximal gespreizte Rotationsachsen, welche nicht in der Ebene beschränkt sind, ermittelt (z.B. drei Rotationen um die drei Hauptachsen).

Anschließend wird abhängig von der Länge des betrachteten Pfadabschnitts eine translatorische Ausweichschritt-Größe entlang der zuvor ermittelten Ausweichrichtungen und eine rotatorische Ausweichschritt-Größe entlang der zuvor ermittelten Rotationsrichtungen berechnet, wobei die Ausweichschritte mit zunehmender Länge des betrachteten Pfadabschnitts immer länger werden. Allerdings ist die Größe der Ausweichschritte nach oben und unten durch parametrisierbare Grenzwerte beschränkt. Durch geeignete Kombinationen der somit gewonnenen translatorischen und rotatorischen Ausweichschritte wird eine Liste von möglichen Ausweich- oder Alternativpositionen für die beiden Positionen, welche den betrachteten Pfadabschnitt definieren, erhalten.

Auf Grundlage dieser ermittelten Alternativpositionen wird eine bestimmte Anzahl von Alternativpfaden erhalten. Diese Alternativpfade werden anschließend in einem Schritt 103 hinsichtlich möglicher Kollisionen mit der Baugruppe bewertet.

Wird entweder eine der beiden Positionen oder beide Positionen des betrachteten Pfadabschnitts durch entsprechende Alternativpositionen ersetzt, müssen neben dem betrachteten Pfadabschnitt auch die benachbarten Pfadabschnitte neu bewertet werden. Diese neue Bewertung ist für alle möglichen Alternativpfade, welche durch geeignete Kombinationen der Alternativpositionen erhalten werden (wobei die Ausweichrichtungen für beide Alternativpositionen jeweils gleich sein müssen), und für alle Alternativpfade, welche durch Ersetzen lediglich einer der beiden Positionen des betrachteten Pfadabschnitts durch eine Alternativposition erhalten werden, zu berechnen. Die Bewertung kann mit derselben Bewertungsfunktion wie im Schritt 101 durchgeführt werden.

Nach der Bewertung der Alternativpfade wird derjenige Alternativpfad ausgewählt, der die beiden folgenden Bedingungen erfüllt:
(A) Die Bewertung des betrachteten Pfadabschnitts, d.h. des zuvor am schlechtesten bewerteten Pfadabschnitts, hat sich bei diesem Alternativpfad gegenüber den anderen Alternativpfaden maximal, d.h. am deutlichsten, verbessert.
(B) Die Bewertung der benachbarten Pfadabschnitte hat sich gegenüber ihrer ursprünglichen Bewertung im Schritt 101 zumindest nicht verschlechtert oder sogar verbessert.

Im Idealfall (Variante A in Fig. 2) wird ein Alternativpfad gefunden, der beide Bedingungen erfüllt und aufgrund seiner Bewertung im Schritt 103 kollisionsfrei ist. In diesem Fall war die Pfadplanung erfolgreich, und der ermittelte Pfad bzw. dessen Positionssequenz wird als Ergebnis über geeignete Ausgabemittel 11 (vgl. Fig. 1, z.B. Bildschirm oder Drucker etc.) ausgegeben. Die Pfadplanung und das iterative Verfahren sind somit beendet (Schritt 104).

Konnte nach Durchführung des Schritts 103 ein Alternativpfad gefunden werden, der zwar beide oben genannte Bedingungen erfüllt, jedoch aufgrund seiner Bewertung nicht vollständig kollisionsfrei ist, wird dieser Alternativpfad als neuer aktuell zu bearbeitender Pfad übernommen (Variante B in Fig. 2). Da dieser Pfad aufgrund des zuvor durchgeführten Schritts 103 bereits vollständig bewertet worden ist, wird anschließend das iterative Verfahren für diesen Pfad beginnend mit Schritt 102 erneut durchgeführt, um diesen Pfad weiter zu verbessern.

Konnte hingegen kein Alternativpfad ermittelt werden, der zugleich beide Bedingungen erfüllt (Variante C in Fig. 2), wird mit einem Schritt 105 fortgefahren, wobei der betrachtete Pfadabschnitt, d.h. der nach dem Schritt 101 am schlechtesten bewertete Pfadabschnitt, in der Mitte geteilt und eine neue zusätzliche Position in die ursprüngliche Positionssequenz des Pfads eingefügt wird. Anschließend wird mit dieser neuen Positionssequenz das iterative Verfahren erneut beginnend mit dem Schritt 101 durchgeführt.

Sollte jedoch der zu zerteilende Pfadabschnitt eine Mindestlänge, die durch einen wählbaren Parameter zuvor festgelegt worden ist, unterschreiten, wird nicht der Schritt 105 durchgeführt, sondern das Verfahren abgebrochen (Schritt 104). In diesem Fall ist die Pfadplanung gescheitert. Dennoch werden Informationen über den zuletzt berechneten Pfad mit einer entsprechenden Mitteilung ausgegeben, da dieser Pfad möglicherweise nahe an einer möglich Lösung ist und dadurch zu lösende Konstruktionsprobleme offensichlich macht. Auf diese Weise können Engstellen der Baugruppe, die beseitigt werden müssen, oder überstehende Elemente der Baugruppe oder des bewegten Bauteils, die hinderlich sind, schnell lokalisiert werden. Die beteiligten Konstrukteure können diese Information entsprechend nutzen, um das jeweils von ihnen entwickelte Bauteil geeignet anzupassen bzw. zu überarbeiten. Besonders vorteilhaft ist es, wenn die zuvor genannten Informationen im Falle einer gescheiterten Pfadplanung automatisch von der Verifizierungseinrichtung 5 an diejenigen Arbeitsplätze 1 übertragen werden, die mit der Konstruktion oder Entwicklung der problematischen Bauteilen befaßt sind.

Es ist zu beachten, daß die zuvor beschriebene Variante C auch dann gewählt wird, wenn im Schritt 102 Alternativpositionen für die Start- und Zielposition berechnet werden sollen, da diese Positionen unveränderbar sind. In diesem Fall wird sofort mit Schritt 105 fortgefahren.

Das zuvor beschriebene iterative und inkrementelle Verfahren zur Bestimmung eines geeigneten Ein- und/oder Ausbaupfads besitzt verschiedene Vorteile. So kann der Benutzer beispielsweise bei der Pfadplanung zusehen, wenn die Zwischenstände auf geeignete Art und Weise visualisiert werden. Zudem kann das Verfahren jederzeit unterbrochen und später wieder aufgenommen werden, da es mit zwei Positionen als Anfangs-Positionssequenz ebenso arbeiten kann wie mit einer beliebigen Anfangs-Positionssequenz. Der Benutzer kann somit die Pfadplanung beeinflussen, indem er beispielsweise offensichtliche grobe Lösungen mit einigen Zwischenpositionen vorgibt und das automatische Verfahren lediglich die Feinarbeit machen läßt.

Da das iterative Verfahren mit beliebigen Positionssequenzen und beliebigen Geometriemodellen arbeiten kann, kann - wie schon erwähnt worden ist - bei Konstruktionsänderungen der Baugruppe oder des bewegten Bauteils ein zuvor als kollisionsfrei ermittelter Pfad erneut dem Verfahren unterzogen werden, um festzustellen, ob dieser Pfad weiterhin kollisionsfrei ist. Ist er immer noch kollisionsfrei, wird dieser Pfad selbst bzw. dessen Positionssequenz von dem Verfahren als Ergebnis ausgegeben, während im anderen Fall das Verfahren versucht, den eingegebenen Pfad zu verbessern und somit einen kollisionsfreien Pfad zu ermitteln. Es können auf diese Weise ganze Montagereihenfolgen automatisch überwacht und aktualisiert werden. Nur wenn es dem Verfahren nicht gelingt, einen Pfad kollisionsfrei zu machen, erfolgt eine Mitteilung an den Benutzer. In diesem Fall kann unter Umständen ein geeigneter Pfad doch noch manuell ermittelt werden. In der überwiegenden Anzahl der Fälle wird jedoch eine entsprechende Überarbeitung der Bauteile erforderlich sein.

Abschließend wird darauf hingewiesen, daß - obwohl zuvor die Erfindung im wesentlichen anhand der Ermittlung eines geeigneten Einbaupfads beschrieben worden ist - die Erfindung selbstverständlich analog auf die Ermittlung eines geeigneten Ausbaupfads angewendet werden kann, falls dieser von dem Einbaupfad abweicht.

## Patentansprüche

1. Verfahren zum Überprüfen der Baubarkeit eines mehrere Bauteile umfassenden Produkts,
wobei digitale Baugruppendaten (8), welche räumliche Geometrieinformationen über eine Baugruppe des Produkts enthalten, vorgegeben werden,
wobei digitale Bauteiledaten (9), welche räumliche Geometrieinformationen über ein an der Baugruppe zu montierendes Bauteil enthalten, vorgegeben werden, und
wobei zur Überprüfung der Baubarkeit der Baugruppe mit dem daran montierten Bauteil mindestens ein kollisionsfreier Pfad für die Montage und/oder Demontage des Bauteils ermittelt wird,
**dadurch gekennzeichnet**,
daß digitale Positionsdaten (10) vorgegeben werden, welche eine Positionssequenz mit mindestens zwei räumlichen Positionen beschreiben, wobei eine erste Position dem montierten Zustand des Bauteils und eine zweite Position dem demontierten Zustand des Bauteils entspricht, und
daß die Baugruppendaten (8), die Bauteiledaten (9) und die Positionsdaten (10) automatisch ausgewertet werden, um automatisch einen geeigneten Pfad für die Montage und/oder Demontage des Bauteils zu ermitteln, welcher eine kollisionsfreie Bewegung des Bauteils von der ersten Position in die zweite Position und/oder umgekehrt ermöglicht.

2. Verfahren nach Anspruch 1,
**dadurch gekennzeichnet**,
daß eine Veränderung der digitalen Baugruppendaten (8) oder der digitalen Bauteiledaten (9) laufend automatisch überwacht wird, und
daß bei Feststellen einer Veränderung der digitalen
Baugruppendaten (8) oder der digitalen Bauteiledaten (9) das Verfahren automatisch durchgeführt wird.

3. Verfahren nach Anspruch 1 oder 2,
**dadurch gekennzeichnet,**
daß die Positionsdaten (10) in Form sechsdimensionaler Daten vorliegen bzw. erzeugt werden, wobei die Positionsdaten für jede Position eine dreidimensionale Komponente zur Beschreibung der räumlichen Position des Bauteils und eine dreidimensionale Komponente zur Beschreibung der räumlichen Orientierung des Bauteils umfassen.

4. Verfahren nach einem der vorhergehenden Ansprüche,
**dadurch gekennzeichnet,**
daß die Baugruppendaten (8) durch automatisches Zusammenfügen von rechnergestützt erzeugten digitalen Bauteiledaten, welche räumliche Geometrieinformationen über die einzelnen Bauteile der Baugruppe enthalten, gewonnen werden.

5. Verfahren nach einem der vorhergehenden Ansprüche,
**dadurch gekennzeichnet**,
daß der geeignete Pfad für die Montage und/oder Demontage des Bauteils automatisch dadurch ermittelt wird, daß die vorgegebene Positionssequenz durch automatische Durchführung eines iterativen Verfahrens, in dessen Verlauf die Positionen der vorgegebenen Positionssequenz verändert oder zusätzliche Positionen in die Positionssequenz eingefügt werden, optimiert wird, bis die für eine kollisionsfreie Montage und/oder Demontage geeignete Positionssequenz erhalten wird.

6. Verfahren nach Anspruch 5,
**dadurch gekennzeichnet**,
daß das iterative Verfahren automatisch solange durchgeführt wird, bis (a) eine Positionssequenz ermittelt worden ist, welche eine vollständig kollisionsfreie Montage und/oder Demontage des Bauteils ermöglicht, oder (b) wegen des Unterschreitens eines vorgegebenen Grenzwerts keine zusätzliche Position mehr in die Positionssequenz eingefügt werden kann,
wobei im Fall (a) die ermittelte Positionssequenz als geeigneter Pfad für die Montage und/oder Demontage des Bauteils automatisch ausgegeben wird, während im Fall (b) die durch die Durchführung des iterativen Verfahrens zuletzt ermittelte Positionssequenz zusammen mit einer entsprechenden Meldung ausgegeben wird.

7. Verfahren nach Anspruch 5 oder 6,
**dadurch gekennzeichnet**,
daß das iterative Verfahren die folgenden Schritte umfaßt:
a) ein durch eine entsprechende Positionssequenz beschriebener aktuell zu verarbeitender Pfad wird automatisch gemäß einer bestimmten Bewertungsfunktion hinsichtlich möglicher Kollisionen mit der Baugruppe bei der Bewegung des Bauteils entlang des Pfads bewertet,
b) bei Feststellen möglicher Kollisionen im Schritt a) werden automatisch für den aktuell bewerteten Pfad mindestens eine Alternativposition ermittelt, wodurch die Positionssequenz des aktuell zu verarbeitenden Pfads entsprechend verändert und somit für den aktuell bewerteten Pfad mindestens ein der veränderten Positionssequenz entsprechender Alternativpfad erzeugt wird, und
c) jeder im Schritt b) erzeugte Alternativpfad wird automatisch gemäß der bestimmten Bewertungsfunktion hinsichtlich möglicher Kollisionen mit der Baugruppe bei der Bewegung des Bauteils entlang des jeweiligen Alternativpfads bewertet.

8. Verfahren nach Anspruch 7,
**dadurch gekennzeichnet**,
daß die in den Schritten a) und c) des iterativen Verfahrens automatisch durchgeführte Bewertung abschnittsweise erfolgt, wobei ein Pfadabschnitt jeweils durch zwei benachbarte räumliche Positionen der entsprechenden Positionssequenz definiert ist.

9. Verfahren nach Anspruch 8,
**dadurch gekennzeichnet**,
daß in den Schritten a) und c) für jeden Pfadabschnitt automatisch anhand der Bauteiledaten (9) ein Bewegungsraum des Bauteils ermittelt und der jeweilige Pfadabschnitt durch Auswertung der Baugruppendaten (8) abhängig davon, wie stark der Bewegungsraum mit der Baugruppe kollidiert, bewertet wird.

10. Verfahren nach Anspruch 3 und Anspruch 9,
**dadurch gekennzeichnet**,
daß für jeden Pfadabschnitt der Bewegungsraum durch eine automatisch durchgeführte lineare Interpolation der Positionskomponenten und der Orientierungskomponenten der Positionsdaten (10) der den jeweiligen Pfadabschnitt begrenzenden Positionen ermittelt wird.

11. Verfahren nach Anspruch 9 oder 10,
**dadurch gekennzeichnet**,
daß für jeden Pfadabschnitt in den Schritten a) und c) automatisch ein Bewertungswert ermittelt wird, welcher ein Maß dafür ist, wie stark mögliche Kollisionen bei einer Bewegung des Bauteils von der den jeweiligen Pfadabschnitt begrenzenden einen Position zu der den jeweiligen Pfadabschnitt begrenzenden anderen Position sind.

12. Verfahren nach Anspruch 11,
**dadurch gekennzeichnet**,
daß für jeden Pfadabschnitt als Bewertungswert automatisch ein kleinster benötigter Skalierungsfaktor für das Bauteil ermittelt wird, der eine Bewegung des gemäß dem jeweiligen Skalierungsfaktor skalierten Bauteils entlang des gesamten Pfadabschnitts ohne Kollision mit der Baugruppe ermöglicht.

13. Verfahren nach Anspruch 12,
**dadurch gekennzeichnet**,
daß für den Fall, daß die den Bauteiledaten (9) entsprechenden räumlichen Geometrieinformationen des Bauteils keiner konvexen oder sternförmigen Geometrie entsprechen, die Geometrie des Bauteils in mehrere konvexe oder sternförmige Teilgeometrien zerlegt, jede Teilgeometrie automatisch einzeln gemäß der bestimmten Bewertungsfunktion bewertet und die einzelnen Bewertungen des Teilgeometrien automatisch zu dem Bewertungswert für den jeweiligen Pfadabschnitt kombiniert werden.

14. Verfahren nach einem der Ansprüche 8-13,
**dadurch gekennzeichnet**,
daß im Schritt b) des iterativen Verfahrens mindestens eine Alternativposition für denjenigen Pfadabschnitt automatisch ermittelt wird, für den im Schritt a) hinsichtlich einer möglichen Kollision mit der Baugruppe die schlechteste Bewertung ermittelt worden ist.

15. Verfahren nach Anspruch 3 und Anspruch 14,
**dadurch gekennzeichnet**,
daß im Schritt b) Alternativpositionen für die den im Schritt
a) am schlechtesten bewerteten Pfadabschnitt definierenden beiden Positionen dadurch ermittelt werden, daß durch automatische Auswertung der entsprechenden Positionsdaten (10) für jede der beiden Positionen
i) automatisch diejenige Ebene bestimmt wird, welche orthogonal zu der Translationsbewegung des Bauteils entlang des jeweiligen Pfadabschnitts durch die jeweilige Position verläuft, wobei innerhalb dieser Ebene automatisch eine bestimmte Anzahl von maximal gespreizten Ausweichrichtungen ermittelt wird,
ii) automatisch eine bestimmte Anzahl von Rotationen um maximal gespreizte Rotationsachsen ermittelt wird, und
iii)abhängig von der Länge des jeweiligen Pfadabschnitts und abhängig von den im Schritt i) ermittelten Ausweichrichtungen mögliche translatorische Ausweichschritte ermittelt sowie abhängig von den im Schritt ii) ermittelten Rotationen mögliche rotatorische Ausweichschritte ermittelt und durch Kombination der rotatorischen Ausweichschritte und der translatorischen Ausweichschritte einer Gruppe von möglichen Alternativpositionen bestimmt wird.

16. Verfahren nach Anspruch 14 oder 15,
**dadurch gekennzeichnet**,
daß nach Durchführung des Schritts c) des iterativen Verfahrens derjenige Alternativpfad automatisch ermittelt wird, für den gilt:
(A) die Bewertung des im Schritt a) am schlechtesten bewerteten Pfadabschnitts hat sich im Vergleich zu den anderen Alternativpfaden maximal verbessert, und
(B) die Bewertung der zu dem im Schritt a) am schlechtesten bewerteten Pfadabschnitt in dem jeweiligen Alternativpfad benachbart angeordneten Pfadabschnitte hat sich im Vergleich zu dem im Schritt a) ursprünglich bewerteten Pfadabschnitt zumindest nicht verschlechtert,
wobei für den Fall, daß die in dem Schritt c) ermittelte Bewertung des die Bedingungen (A) und (B) erfüllenden Alternativpfads eine Kollisionsfreiheit mit der Baugruppe bei der Bewegung des Bauteils entlang dieses Alternativpfads anzeigt, das iterative Verfahren beendet und dieser Alternativpfad automatisch als geeigneter Pfad für die Montage und/oder Demontage des Bauteils ausgegeben wird.

17. Verfahren nach Anspruch 16,
**dadurch gekennzeichnet**,
daß für den Fall, daß kein Alternativpfad ermittelt werden konnte, der die beiden Bedingungen (A) und (B) erfüllt, der im Schritt a) des iterativen Verfahrens am schlechtesten bewertete Pfadabschnitt automatisch unterteilt wird, wobei in die dem im Schritt a) ursprünglich bewerteten Pfad entsprechende Positionssequenz automatisch eine zusätliche Position eingefügt wird und die somit erweiterte Positionssequenz automatisch erneut dem iterativen Verfahren beginnend mit dem Schritt a) unterzogen wird.

18. Verfahren nach Anspruch 17,
**dadurch gekennzeichnet**,
daß für den Fall, daß der zu unterteilende Pfadabschnitt eine bestimmte Mindestlänge unterschreitet, automatisch das iterative Verfahren abgebrochen und eine entsprechende Meldung zusammen mit dem zuletzt bewerteten Pfad bzw. der diesen Pfad beschreibenden Positionssequenz ausgegeben wird.

19. Verfahren nach einem der Ansprüche 16-18,
**dadurch gekennzeichnet**,
daß für den Fall, daß die in dem Schritt c) ermittelte Bewertung des die Bedingungen (A) und (B) erfüllenden Alternativpfads keine Kollisionsfreiheit mit der Baugruppe bei der Bewegung des Bauteils entlang dieses Alternativpfads anzeigt, dieser Alternativpfad als neuer aktuell zu verarbeitender Pfad automatisch dem iterativen Verfahren beginnend mit dem Schritt b) unter Bezugnahme auf die zuvor ermittelte Bewertung dieses Alternativpfads unterzogen wird.

20. Verfahren nach einem der Ansprüche 7-19,
**dadurch gekennzeichnet**,
daß das iterative Verfahren automatisch beginnend mit der ursprünglich vorgegebenen Positionssequenz bzw. dem dieser ursprünglichen Positionssequenz entsprechenden Pfad durchlaufen wird.

21. Vorrichtung zum Überprüfen der Baubarkeit eines mehrere Bauteile umfassenden Produkts,
mit ersten Speichermitteln (8) zum Speichern von digitalen Baugruppendaten, welche räumliche Geometrieinformationen über eine Baugruppe des Produkts enthalten, und
mit zweiten Speichermitteln (9) zum Speichern von digitalen Bauteiledaten, welche räumliche Geometrieinformationen über ein an der Baugruppe zu montierendes Bauteil enthalten,
**dadurch gekennzeichnet**,
daß dritte Speichermittel (10) zum Speichern von digitalen Positionsdaten (10), welche eine Positionssequenz mit
mindestens zwei räumlichen Positionen beschreiben, vorgesehen sind, wobei eine erste Position dem montierten Zustand des Bauteils und eine zweite Position dem demontierten Zustand des Bauteils entspricht, und
daß Auswertungsmittel (5) zur automatischen Auswertung der Baugruppendaten, der Bauteiledaten und der Positionsdaten vorgesehen sind, um automatisch einen geeigneten Pfad für die Montage und/oder Demontage des Bauteils zu ermitteln, welcher eine kollisionsfreie Bewegung des Bauteils von der ersten Position in die zweite Position und/oder umgekehrt ermöglicht.

22. Vorrichtung nach Anspruch 21,
**dadurch gekennzeichnet**,
daß die Auswertungsmittel zur Durchführung des Verfahrens nach einem der Ansprüche 1-20 ausgestaltet sind.

23. Vorrichtung nach Anspruch 21 oder 22,
**dadurch gekennzeichnet**,
daß Eingabemittel (11) zur frei wählbaren Eingabe der dem demontierten Zustand des Bauteils entsprechenden Position vorgesehen sind.

24. Vorrichtung nach einem der Ansprüche 21-23,
**dadurch gekennzeichnet**,
daß Ausgabemittel (11) zur automatischen Ausgabe des von den Auswertungsmitteln (3) ermittelten und für die Montage und/oder Demontage des Bauteils geeigneten Pfads bzw. der diesem Pfad entsprechenden Positionssequenz vorgesehen sind.

25. System zum Überprüfen der Baubarkeit eines mehrere Bauteile umfassenden Produkts,
mit mehreren Bauteiledaten-Erzeugungseinrichtungen (1) zum rechnergestützten Konstruieren eines Bauteils des Produkts und zum automatischen Erzeugen von digitalen Bauteiledaten (9) des jeweils konstruierten Bauteils,
mit einer Baugruppendaten-Erzeugungseinrichtung (3, 4), welche mit den einzelnen Bauteiledaten-Erzeugungseinrichtungen (1) über ein Datenübertragungsnetz (6) zum automatischen Erzeugen von digitalen Baugruppendaten (8) in Form einer digitalen Abbildung einer Baugruppe des Produkts durch Zusammenfügen der von den Bauteiledaten-Erzeugungseinrichtungen (1) bereitgestellten digitalen Bauteiledaten der einzelnen Bauteile verbunden sind, und
mit einer Vorrichtung (7) nach einem der Ansprüche 21-24, wobei die Vorrichtung (7) mit den einzelnen Bauteiledaten-Erzeugungseinrichtungen (1) zum Zugriff auf die Bauteiledaten (9) sowie der Baugruppendaten-Erzeugungseinrichtung (3,4) zum Zugriff auf die Baugruppendaten (8) gekoppelt ist.

26. System nach Anspruch 25,
**dadurch gekennzeichnet**,
daß die Auswertungsmittel (5) der Vorrichtung (7) laufend die von den einzelnen Bauteiledaten-Erzeugungseinrichtungen (1) erzeugten Bauteiledaten (9) und die von der Baugruppendaten-Erzeugungseinrichtung (3,4) erzeugten Baugruppendaten (8) überwacht und bei einer Veränderung der Bauteiledaten (9) oder der Baugruppendaten (8) eine neue automatischen Auswertung der Baugruppendaten (8), der Bauteiledaten (9) und der Positionsdaten (10) durchführen, um automatisch einen geeigneten Pfad für die Montage und/oder Demontage eines ausgewählten Bauteils zu ermitteln, welcher eine kollisionsfreie Bewegung des Bauteils von der ersten Position in die zweite Position und/oder umgekehrt ermöglicht.

27. Verfahren, Vorrichtung oder System nach einem der vorhergehenden Ansprüche,
**dadurch gekennzeichnet**,
daß die Baugruppe eine Baugruppe der Kraftfahrzeug-, Luft-, Raumfahrt-, Schiffbau- und/oder Konsumgüterindustrie ist.
